Europäisches Patentamt

European Patent Office

Office européen des brevets

(11) Publication number: **0 256 855 B1**

# EUROPEAN PATENT SPECIFICATION

(45) Date of publication of patent specification: **08.07.92** (51) Int. Cl.5: **A01N 25/18**

(21) Application number: **87307150.0**

(22) Date of filing: **13.08.87**

The file contains technical information submitted after the application was filed and not included in this specification

(54) **An insecticidal composition for an electric fumigator.**

(30) Priority: **15.08.86 JP 191527/86**

(43) Date of publication of application:
**24.02.88 Bulletin 88/08**

(45) Publication of the grant of the patent:
**08.07.92 Bulletin 92/28**

(84) Designated Contracting States:
**ES FR GB GR IT NL**

(56) References cited:
**EP-A- 0 148 625**
**GB-A- 2 002 635**
**GB-A- 2 130 883**
**GB-A- 2 180 751**
**US-A- 3 934 023**

(73) Proprietor: **SUMITOMO CHEMICAL COMPANY, LIMITED**
**Kitahama 4-chome 5-33**
**Chuo-ku Osaka 541(JP)**

(72) Inventor: **Yamamoto, Shinobu**
**4-8 Jonai 1-chome Hatsukaichicho**
**Saeki-gun Hiroshima-ken(JP)**
Inventor: **Okada, Kunihiro**
**30, Yahatagaoka-2-chome Itsukaichicho**
**Saeki-ku Hiroshima-shi(JP)**
Inventor: **Ohi, Satoshi**
**745, Oaza Kodo Kochicho Kamo-gun**
**Hiroshima-ken(JP)**
Inventor: **Oyama, Shiro**
**Fumakira Shataku 7-15 Tsuji-7-chome**
**Urawa-shi(JP)**
Inventor: **Takei, Yasuharu**
**31-3, Inokuchi-4-chome Nishi-ku**
**Hiroshima-shi(JP)**

(74) Representative: **Harrison, David Christopher et al**
**MEWBURN ELLIS & CO 2/3 Cursitor Street**
**London EC4A 1BO(GB)**

## Description

The present invention relates to an insecticidal composition for an electric fumigator used for destroying insects, e.g. mosquitos and houseflies. More particularly, this relates to an insecticidal article for use with an electric fumigator and comprising a porous mat containing a small amount of an insecticidally active composition, which composition exhibits a sufficient insecticidal activity over a long period of time when it is heated, for example, by means of an electric heater to fumigate the air with the active ingredients of the composition.

Up to this time, various forms of apparatus for controlling harmful insects have been used domestically. Such forms of apparatus have included the so-called mosquito coil (a mosquito repellant incense), oily insecticide, aerosol, electric fumigator and the recently-developed portable mosquito destroyer for camping or out-door labour utilizing the oxidation of methanol with catalyst. Among these, the electric fumigator is widely used. A method for controlling insects by heat fumigation is as follows:

A mat made of, for example, pulp, asbestos, an inorganic porous substance, or a porous synthetic resin is impregnated (dipped and dropped) and/or coated with an insecticidal pyrethroid preparation. This mat is then heated at about 120°C-200°C by, for example, an electric heater to effectively fumigate a certain amount of insecticidally active ingredient over a long period of time.

The object of this method is to exhibit the insecticidal activity over a long period of time by fumigating the active ingredient constantly by heat. In a known apparatus, the insecticidal preparation comprises an insecticide capable of heat fumigation such as Pynamin Forte ® [dl-3-allyl-2-methylcyclopent-2-en-4-on-1-yl-d-cis•trans-cyrysanthemate (a trade mark of Sumitomo Chemical Co., Ltd.)], and, for example, a suitable amount of a fumigation regulator, an antioxidant, perfume, and a dyestuff. Such heat fumigating insecticidal mats are impregnated with more than 40 mg of this preparation per mat to exhibit a sufficient insecticidal activity.

Since Pynamin Forte, generally used as an insecticide in the heat fumigating insecticidal mat, has a low thermal stability, i.e. it is easily decomposed, an antioxidant is added thereto to suppress the thermal decomposition. Furthermore, it has a vaporizability so high that it is fumigated off in a short time, so that an antioxidant, synergist and/or an organic compound having a high boiling point need to be added to control the fumigation. Pynamin Forte shows a relatively high knock-down effect; however, it has a low mortality effect compared with other pyrethroid insecticides.

Until now, there has been a lot of research aiming at increasing the mortality effect of ordinary temperature-contact type preparations such as oily or powdery preparations (formulations), emulsions or aerosols. As a result, it has been shown clearly that the addition of a so-called synergist to a pyrethroid insecticide improves the insecticidal activity. However, it is greatly influenced by the type of insecticidally active ingredient or synergist, the combination thereof, the form of insecticide or the species of harmful insect. In some cases, no improvement in insecticidal activity occurs even when the synergist is added. As to the heat fumigating preparation, a similar effect is generally believed to result. However, detailed reports about such preparations are surprisingly few. Among them, there is a study of the mosquito coil, reporting that the trend of variation of the insecticidal activity in the mosquito coil differs from those in the other formulations (see "On the Insecticidal Activity of Synthetic Pyrethroids", BOTYU-KAGAKU (Insect Control Science), vol. 37, 11). We have also examined preparations for a heat fumigating insecticidal mat to obtain the result that the trend of their variation in insecticidal activity is far from similar to that of ordinary temperature-contact type preparations. The addition of a would-be synergist, depending on the type or the amount, sometimes gives no improvement, or sometimes even results in a deterioration in the activity by regulating the fumigation.

Above all, the health of consumers becomes more and more important nowadays. Therefore, it is desirable to provide a heat fumigating insecticidal mat having a low content of insecticidal active ingredient from the viewpoint of safety i.e. low toxicity and environmental pollution. This also brings about economic advantages because a lowering of the content of the insecticidal active ingredient used can reduce the manufacturing cost.

However, as mentioned above, to date, the effect of the addition of a synergist to the insecticidal active ingredient in a preparation for use with a heat fumigating insecticidal mat has not been sufficiently clarified. Thus, the addition of a would-be synergist does not always improve the insecticidal activity, or in some cases, on the contrary it reduces the insecticidal activity depending on the type or amount of synergist. To date, there has not been obtained a heat fumigating insecticidal active ingredient and the capacity to exhibit insecticidal activity over a long period of time.

Accordingly, an object of the present invention is to provide an insecticidal composition for an electric fumigator used for destroying insects, e.g. mosquitos or houseflies, the composition having a low content of

2

the insecticidal active ingredient in an insecticidal mat, and being able to constantly fumigate the insecticidal active ingredient and synergist in the air to exhibit a sufficient insecticidal activity over a long period of time.

It is found that this object is attained by a fumigator mat of the present invention consisting essentially of a preparation comprising a specific insecticidal active ingredient (in any one or more of its isomeric forms), a specific portion of a synergist selected from a specific range and a porous mat, the mat being impregnated and/or coated with the preparation.

An insecticidal article of the present invention for an electric fumigator consists essentially of:

(A) an insecticidally effective amount of a preparation comprising 2-methyl-4-oxo-3-(2-propynyl)-cyclopent-2-enyl-chrysanthemate (hereinafter referred to as "PA") and a synergist selected from a particular range thereof as described below, wherein the weight ratio of the synergist to the PA is from 0.5 to 8 parts inclusive of synergist per 1 part of PA and

(B) a porous mat impregnated with the preparation in an amount such as to provide from 5 to 20 mg inclusive of PA per mat.

Use of a fumigator mat according to the present invention enables a remarkably high synergistic effect to be achieved such that the fumigation ratio of synergist to insecticidally active ingredient is maintained at a high level over a long period of time; hence a sufficient insecticidal activity continues to be exhibited over a long period of time even though only a small amount of the PA is used.

As mentioned above the insecticidal fumigator mat of the present invention contains from 5 to 20mg of the PA, while a conventional one usually contains about twice that amount of the insecticidal active ingredient. Thus, the mat of this invention, using a small amount of insecticidal active ingredient, has various advantages such as low environmental pollution, high safety and low manufacturing cost.

The synergist is selected from $\alpha$-[2-(2-butoxyethoxy)ethoxy]-4,5-methylenedioxy-2-propyltoluene (hereinafter referred to as piperonyl butoxide), octachlorodipropyl ether (hereinafter referred to as S-421) and N-(2-ethylhexyl)-bicyclo-[2,2,1]-hept-5-en-2,3-dicarboxyimide (hereinafter referred to as MGK-264), preferably piperonyl butoxide.

A synergistic effect by adding a compound such as the above is scarcely revealed in a conventional insecticidal mat when the active ingredient is Pynamin Forte. The reason for this is considered to be as follows:

Firstly, the vapor pressure of Pynamin Forte differs from those of conventionally used synergists. Thus, the synergists are fumigated so rapidly or so slowly compared with Pynamin Forte that they fail to exhibit the synergistic effect. Secondly, because of the rapid fumigation of Pynamin Forte, it is relatively difficult to control the fumigation rate of Pynamin Forte. In other words, it is difficult to fumigate a sufficient amount of synergist to enable the synergistic effect to be exhibited over a long period of time. Thirdly, above all, it is very difficult to select the proper type or proportion of synergist accordingly. Therefore, as a result, it is almost impossible to obtain an insecticidal mat having a sufficient insectical activity with a low content of the insecticidal active ingredient.

The PA used in the preparation for a fumigator mat of the present invention, when compared with Pynamin Forte, is found to have excellent properties such as low fumigation rate and high insecticidal activity so that it can be practically used within a wide range of amounts and, more especially, it may be present in particularly low amounts.

However, even though the PA has the above-mentioned excellent properties, then unless a synergist is also present, the PA alone cannot exhibit a sufficient insecticidal activity when its content becomes too low. However, in such a case, when a synergist is added thereto to exhibit its synergistic effect, a high insecticidal activity can be obtained.

In general, it is necessary to enhance the fumigation ratio of synergist to insecticidal active ingredient to improve the insecticidal activity by utilizing sufficient synergistic effect. We have found that a composition capable of exhibiting the excellent insecticidal activity over a long period of time is produced from the high fumigation ratio of synergist to insecticidal active ingredient by using the above-mentioned PA and a specific synergist in a specific content ratio.

The PA has geometric isomers derived from its acid moiety and optical isomers derived from asymmetric carbon atoms of the acid moiety and alcohol moiety. In a fumigator mat of the present invention, any of these isomers can be used alone or in admixture thereof.

The content of the PA is within the range from 5 to 20 mg inclusive per mat area of 770 mm$^2$, the mat having a thickness of 1-3 mm. One reason for this is to meet the object of the present invention to lower the content of the PA used. The other is that it is difficult to obtain a high fumigation ratio of synergist to insecticidal active ingredient when the PA is used in high content. This is because, in such a case, there is a difficulty in controlling the fumigation ratios of the PA and synergist, which fumigation ratios are often repressed. The PA content defined above is based on a mat having 22 mm in width, 35 mm in length and 2 mm in thickness, so that when a mat of different size is used, the PA content may be determined accordingly as described above. The mat can be used at a thickness ranging from 1 to 3 mm, preferably 1.5 to 2.5 mm.

The weight ratio of synergist to the PA ranges from 0.5 to 8 parts inclusive of synergist per 1 part PA. When the ratio is less than 0.5:1, the fumigation ratio of synergist to the PA becomes so low that a sufficient synergistic effect is not produced. On the contrary, when the ratio exceeds 8:1, the mortality of insects only shows a slight synergism. Thus, the maximum mortality can be expected for a porportional amount of synergist per part of PA within the range from around 1 to 4 inclusive of synergist per part of PA.

In addition to the PA and synergist, known additives such as an antioxidant, repellant, fumigation regulator, perfume or dyestuff can be added to the preparation used with a fumigator mat of the present invention. Since the chrysanthemates generally lack stability to heat, light and oxidation, then to improve the stability a suitable amount of antioxidant can be added such as 2,6-di-tert-butyl-4-methylphenol(BHT), 3-tert-butyl-4-hydroxyanisole (BHA), 2,2'-methylene-bis(4-ethyl-6-tert-butylphenol), 2,2'-methylene-bis(4-methyl-6-tert-butylphenol), 4,4'-butylidene-bis(5-methyl-6-tert-butylphenol), 4,4'-methylene-bis(2-methyl-6-tert-butylphenol), 4,4'-thio-bis(3-methyl-6-tert-butylphenol), 4,4'-methylene-bis(2,6-di-tert-butylphenol), stearyl-$\beta$-(3,5-di-tert-butyl-4-hydroxyphenol)propionate, 1,3,5-trimethyl-2,4,6-tris(3,5-di-tert-butyl-4-hydroxybenzylbenzene), 1,1,3-tris(2-methyl-4-hydroxy-5-tert-butyl)butane, tetrakis[methylene(3,5-di-tert-butyl-4-hydroxycinnamate)]-methane, dilauryl thiodipropionate and distearyl thiodipropionate, or a U.V. absorber such as benzophenone, triazole, or a salicylate compound.

As to the PA, it is usual to add one or more stabilizers such as antioxidants or U.V. absorbers as described above.

The insecticidal mat of the present invention can be manufactured by impregnating other above-mentioned preparation into, and/or coating it onto, a porous substance such as pulp, asbestos, porous synthetic resin, porous inorganic powder, glass fiber, cloth, mineral powder, or porous porcelain material. One example of a porous mat used in the present invention is a mat consisting of 50% of cotton fiber and 50% of pulp fiber. It is preferable to use natural fibers for the mat from the viewpoint of the absorptivity and retention of the insecticidal active ingredient. This manufacture can be conducted either by a volatile solvent method or by a method not utilizing a volatile solvent. The volatile solvent method is carried out as follows:

The insecticidal preparation is dissolved in an volatile organic solvent. The desired amount of the preparation is applied to a mat by dipping the mat in this solution or by making this solution fall in drops on the mat. The mat is then dried by removing the volatile solvent and packed. However, the method not utilizing volatile solvent, is preferable because the volatile solvent method has disadvantages such as environmental pollution and danger of fire due to the presence of large amounts of volatile organic solvent in the vicinity of a dryer. With the method not utilizing volatile solvent, the preparation without organic solvent is made to fall in drops onto the mat followed by the packaging thereof. In 2 or 3 days, at ordinarly temperature (ca. 20-25°C), the preparation diffuses uniformly over the mat. The PA used in the present invention is a liquid at room temperature (ca. 20-25°C), so that the method not utilizing volatile solvent can be advantageously utilized.

The following examples further illustrate the practice of the present invention.

Example 1

Porous mats (cotton fiber: 50%, pulp fiber: 50%) of 35 mm in length, 22 mm in width and 2 mm in thickness were impregnated with different preparations consisting of 5, 10, 20, 30 or 40 mg of (S)-2-methyl-4-oxo-3-(2-propynyl)cyclopent-2-enyl(1R)-cis•trans-chrysanthemate (hereinafter referred to as Prallethrin), 40 mg of piperonyl butoxide, 15 mg of BHT and 0.5 mg of a dyestuff to prepare the test insecticidal mats. For comparison with them, commercially available mat A containing 40 mg of Pynamin Forte and 40 mg of piperonyl butoxide was also tested (22 mm in width, 35 mm in length and 2.8 mm in thickness). These mats were subjected to fumigation on an electric heater at 165°C for 12 hours successively. The fumigation rates of synergist and insecticidal active ingredient at the 2 hour interval were determined from the quantitative analyses of Prallethrin, Pynamin Forte and piperonyl butoxide. The results are shown in Table 1.

The fumigated amount of the insecticidal active ingredients and synergist were determined as follows:

Vaporized samples were trapped in succession at intervals of 2 hours by silica gel-packed columns and extracted with chloroform; the extracts were then quantitatively analyzed by gas chromatography.

The fumigation ratios were calculated according to the formula below:

Fumigation ratio = (fumigated amount of synergist)/(fumigated amount of insecticidal active ingredient)

Table 1

| passage of time (hr) | fumigation ratio | | | | | |
|---|---|---|---|---|---|---|
| | Prallethrin content (mg/mat) | | | | | Commercially available mat A |
| | 5 | 10 | 20 | 30 | 40 | |
| 0 - 2 | 1.68 | 1.24 | 1.03 | 0.66 | 0.23 | 0.12 |
| 2 - 4 | 2.03 | 1.29 | 1.29 | 0.74 | 0.34 | 0.17 |
| 4 - 6 | 2.81 | 1.45 | 1.33 | 0.88 | 0.41 | 0.22 |
| 6 - 8 | 4.27 | 1.58 | 1.40 | 0.90 | 0.55 | 0.29 |
| 8 - 10 | 5.35 | 1.70 | 1.54 | 1.06 | 0.61 | 0.37 |
| 10 - 12 | 6.80 | 2.37 | 1.67 | 1.24 | 0.73 | 0.48 |

As is clear from the results above, the high fumigation ratios are obtained when the mats contain 5-20 mg of Prallethrin per mat. Prallethrin gave about decuple values as compared with the value in the case where the commercially available mat A containing Pynamin Forte was used. Therefore, when using the impregnated mats embodying the present invention, high synergistic effects are expected. This is also shown in the following Examles.

Example 2

The test mats were prepared by impregnating porous mats (cotton fiber: 50%, pulp fiber: 50%) with preparations consisting of 5, 10, 20, 30 and 40 mg of Prallethrin, 20 mg of piperonyl butoxide, 10 mg of 2,2'-methylene-bis(4-ethyl-6-tert-butylphenol) as an antioxidant and 0.5 mg of a dyestuff. A test mat was also prepared by impregnating the mat with a preparation (blank) consisting of the same components as above except piperonyl butoxide.

In a cylinder of 20 cm in bore and 45 cm in height, 20 female adult mosquitos (Culex pipiens) were released. In this cylinder, an electric fumigator having a test mat on, which mat had been fumigated by the heater at 165°C, was placed for 30 seconds. Then the knocked-down mosquitos were put out, and the number of dead mosquitos were counted after 24 hours. The procedure was repeated five times. The mortality is defined as the value obtained by dividing the total number of dead mosquitos by total number of released mosquitos, and the mortality ratio is calculated as follows:

Mortality ratio = (mortality in the case where the synergist-containing mat is used)/(mortality in the case where the blank mat is used)

The results are shown in Table 2.

Table 2

| Passage of time (hr) | mortality ratio | | | | |
|---|---|---|---|---|---|
| | Prallethrin content (mg/mat) | | | | |
| | 5 | 10 | 20 | 30 | 40 |
| 0 - 2 | 1.54 | 1.62 | 1.50 | 1.25 | 1.16 |
| 2 - 4 | 2.34 | 2.11 | 1.59 | 1.36 | 1.06 |
| 4 - 6 | 2.45 | 2.34 | 1.78 | 1.38 | 1.03 |
| 6 - 8 | 3.16 | 2.11 | 1.92 | 1.40 | 1.13 |
| 8 - 10 | 3.73 | 3.14 | 1.64 | 1.35 | 1.16 |
| 10 - 12 | 4.12 | 3.08 | 2.03 | 1.48 | 1.14 |

From the above results, it is observed that within the range where the content of Prallethrin was relatively low, high mortality ratios, i.e. high synergistic effects were obtained. It is also expected that the mortality ratios will become less than 1 and no synergistic effect will be exhibited when the synergist content is less than 1/2 of the Prallethrin content.

Example 3

Test mats were prepared by impregnating mats (cotton fiber: 50%, pulp fiber: 50%) having the same size as above with 10 mg of Prallethrin, 0, 10, 20, 40, 60 or 80 mg of piperonyl butoxide, 10 mg of BHT and 1 mg of a dyestuff.

The mortality test was carried out in the same manner as in Example 2 to clarify the effect of the synergist. The results are shown in Table 3.

Table 3

| passage of time (hr) | mortality ratio | | | | | |
|---|---|---|---|---|---|---|
| | synergist content (mg/mat) | | | | | |
| | 0 blank | 10 | 20 | 40 | 60 | 80 |
| 0 - 2 | 1.00 | 1.93 | 1.78 | 1.73 | 1.54 | 1.38 |
| 2 - 4 | 1.00 | 2.03 | 2.18 | 1.70 | 1.73 | 1.46 |
| 4 - 6 | 1.00 | 2.30 | 2.32 | 2.22 | 1.96 | 1.52 |
| 6 - 8 | 1.00 | 2.21 | 2.58 | 2.38 | 2.00 | 1.66 |
| 8 - 10 | 1.00 | 2.10 | 2.22 | 2.10 | 1.83 | 1.74 |
| 10 - 12 | 1.00 | 2.14 | 2.25 | 2.05 | 1.67 | 1.56 |

From the results above, it is evident that remarkably high synergistic effects were obtained when the synergist content was less than 8-times that of Prallethrin.

Example 4

A test mat was prepared by allowing drops of a preparation consisting of 10 mg of Prallethrin, 30 mg of piperonyl butoxide, 20 mg of BHT and 1 mg of a dyestuff to fall on the mat (cotton fiber: 50%, pulp fiber: 50%) having the same size as above. Another test mat (blank) was prepared in the same manner as above except that piperonyl butoxide was not contained in the preparation.

In a chamber having 28 m$^3$, the fumigations were carried out by using each test mat for 12 hours successively at a heating temperature of 165°C. Then, 100 female adult mosquitos were introduced into this chamber at intervals as shown in Table 4. Two hours later, the knocked-down mosquitos were put out and the numbers of dead mosquitos were counted after 24 hours. The mortality is defined as same as above. The results are shown in Table 4.

For a comparison with this, tests were also carried out using the commercially available mat B containing 40 mg of Pynamin Forte and 30 mg of piperonyl butoxide and the same mat containing the same components except piperonyl butoxide (both having the same size, namely 22 mm in width, 35 mm in length and 2.8 mm in thickness). The mortalities and mortality ratios of commercially available mat B to its blank were determined in the same manner as above. The results are shown in Table 4.

Table 4

| passage of time (hr) | mortality ratio | |
| --- | --- | --- |
| | the present composition (used Prallethrin) | commercially available mat B (used Pynamin Forte) |
| 0 - 2 | 1.52 | 1.09 |
| 3 - 5 | 1.85 | 1.04 |
| 7 - 9 | 2.25 | 0.97 |
| 10 - 12 | 3.10 | 0.93 |

From the results above, it is clear that there was no synergistic effect by piperonyl butoxide when Pynamin Forte was used. On the contrary, a remarkably high synergistic effect was produced when the insecticidal active ingredient of the present invention was used.

**Claims**

1.  An insecticidal article for an electric fumigator consisting essentially of:
    (A) a preparation comprising 2-methyl-4-oxo-3-(2-propynyl) cyclopent-2-enyl-chrysanthemate and a synergist selected from $\alpha$-[2-(2-butoxyethoxy)ethoxy]-4,5-methylenedioxy-2-propyltoluene, octachlorodipropyl ether and N-(2-ethylhexyl)-bicyclo-[2,2,1]-hept-5-en-2,3-dicarboxyimide wherein the weight ratio of said synergist to said chrysanthemate ranges from 1:2 to 8:1 inclusive, and
    (B) a porous mat suitable for use as an insecticidal mat, said porous mat being impregnated with said preparation, wherein the amount of 2-methyl-4-oxo-3-(2-propynyl)cyclopent-2-enyl-chrysanthemate is from 5 to 20 mg inclusive per mat area of 770 mm$^2$, the mat having a thickness of 1-3 mm.

2.  An insecticidal article according to Claim 1, wherein the synergist is $\alpha$-[2-(2 butoxyethoxy)ethoxy]-4,5-methylenedioxy-2-propyltoluene.

3.  An insecticidal article according to Claim 1 or Claim 2, wherein the content or the synergist is from 1 to 4 parts inclusive by weight per part by weight 2-methyl-4-oxo-3-(2-propynyl)-cyclopent-2-enyl-chrysanthemate.

4.  An insecticidal article according to Claim 1, 2 or 3, wherein the chrysanthemate is (S)-2-methyl-4-oxo-3-(2-propynyl)-cyclopent-2-enyl (1R)cis-trans-chrysanthemate.

5.  A method for knocking down harmful insects or for freeing a particular environment therefrom, which comprises exposing the insects to the vapour produced by heating the insecticidal article according to Claim 1.

6.  A method according to Claim 5, wherein the insects are mosquitos.

**Revendications**

1.  Article insecticide pour fumigateur électrique consistant essentiellement en
    A) une préparation comprenant du chrysanthémate de 2-méthyl-4-oxo-3-(2-propynyl)cyclopent-2-ènyle et un agent de synergie choisi entre l'$\alpha$-[2-(2-butoxyéthoxy)éthoxy]-4,5-méthylènedioxy-2-propyltoluène, l'éther octachlorodipropylique et le N-(2-éthylhexyl)bicyclo[2.2.1]hept-5-ène-2,3-dicarboxyimide, dans laquelle le rapport pondéral dudit agent de synergie audit chrysanthémate est compris entre 1:2 et 8:1 compris, et
    B) une tablette poreuse convenant pour l'utilisation comme tablette insecticide, ladite tablette poreuse étant imprégnée de ladite préparation, la quantité de chrysanthémate de 2-méthyl-4-oxo-3-(2-propynyl)cyclopent-2-ènyleétant de 5 à 20 mg compris par 770 mm$^2$ de surface de tablette, la tablette ayant une épaisseur de 1-3 mm.

**2.** Article insecticide selon la revendication 1, dans lequel l'agent de synergie est l'α-[2-(2-butoxyéthoxy)-éthoxy]-4,5-méthylènedioxy-2-propyltoluène.

**3.** Article insecticide selon la revendication 1 ou la revendication 2, dans lequel la teneur en agent de synergie est de 1 à 4 parties compris en poids par partie en poids de chrysanthémate de 2-méthyl-4-oxo-3-(2-propynyl)cyclopent-2-ènyle.

**4.** Article insecticide selon la revendication 1, 2 ou 3, dans lequel le chrysanthémate est le (1R)-cis,trans-chrysanthémate de (S)-méthyl-4-oxo-3-(2-propynyl)cyclopent-2-ènyle.

**5.** Procédé pour étourdir des insectes nuisibles ou pour en débarrasser un environnement particulier, qui consiste à exposer les insectes à la vapeur produite par chauffage de l'article insecticide selon la revendication 1.

**6.** Procédé selon la revendication 5, dans lequel les insectes sont des moustiques.

**Patentansprüche**

**1.** Insektizider Gegenstand für einen Elektroräucherapparat, bestehend im wesentlichen aus:

(A) einer Präparation, umfassend 2-Methyl-4-oxo-3-(2-propinyl)-cyclopent-2-enyl-chrysanthemat und einen synergistischen Stoff, ausgewählt aus α-[2-(2-Butoxyethoxy)ethoxy]-4,5-methylendioxy-2-propyltoluol, Octachlordipropylether und N-(2-Ethylhexyl)-bicyclo-[2,2,1]-hept-5-en-2,3dicarboxyimid, worin das Gewichtsverhältnis dieses synergistischen Stoffes zu diesem Chrysanthemat von 1 : 2 bis 8 : 1 einschließlich reicht, und

(B) einer porösen, für die Verwendung als Insektizidmatte geeigneten Matte, wobei diese poröse Matte mit dieser Präparation imprägniert ist und die Menge des 2-Methyl-4-oxo-3-(2-propinyl)-cyclopent-2-enyl-chrysanthemats von 5 bis 20 mg einschließlich pro Mattenfläche von 770 mm$^2$ beträgt und die Matte eine Dicke von 1 bis 3 mm besitzt.

**2.** Insektizider Gegenstand nach Anspruch 1, worin der synergistische Stoff α-[2-(2-Butoxyethoxy)ethoxy]-4,5-methylendioxy-2-propyltoluol ist.

**3.** Insektizider Gegenstand nach Anspruch 1 oder 2, worin der Gehalt des synergistischen Stoffes von 1 bis 4 Gewichtsteilen einschließlich pro Gewichtsteil 2-Methyl-4-oxo-3-(2-propinyl)-cyclopent-2-enyl-chrysanthemat beträgt.

**4.** Insektizider Gegenstand nach Anspruch 1, 2 oder 3, worin das Chrysanthemat (S)-2-Methyl-4-oxo-3-(2-propinly)-cyclopent-2-enyl-(1R)cis-trans-chrysanthemat ist.

**5.** Verfahren zum Niederschlagen schädlicher Insekten oder zum Befreien eines besonderen Umgebungsortes hiervon, welches die Exposition der Insekten mit dem Dampf umfaßt, welcher durch Erhitzen des insektiziden Gegenstandes nach Anspruch 1 produziert wurde.

**6.** Verfahren nach Anspruch 5, wobei die Insekten Moskitos sind.